# EUROPÄISCHE PATENTSCHRIFT

(11) **EP 3 494 369 B1**
(45) Veröffentlichungstag und Bekanntmachung des Hinweises auf die Patenterteilung: **14.10.2020**
(21) Anmeldenummer: 17749116.4
(22) Anmeldetag: 14.07.2017
(51) Int. Cl.: G01D 11/24

(54) **SENSOR, VERFAHREN ZUR HERSTELLUNG DES SENSORS, BETÄTIGUNGSEINRICHTUNG, VERFAHREN ZUR HERSTELLUNG DER BETÄTIGUNGSEINRICHTUNG UND REIBUNGSKUPPLUNG**
SENSOR AND METHOD OF MANUFACTURING THEREOF, ACTUATOR AND METHOD OF MANUFACTURING THEREOF AND FRICTION CLUTCH
CAPTEUR ET SON PROCÉDÉ DE FABRICATION, ACTIONNEUR ET SON PROCÉDÉ DE FABRICATION ET EMBRAYAGE À FRICTION

(30) Priorität: 02.08.2016 DE 102016214212
(43) Veröffentlichungstag der Anmeldung: 12.06.2019
(73) Patentinhaber: Schaeffler Technologies AG & Co. KG, 91074 Herzogenaurach (DE)
(72) Erfinder: KOMBOWSKI, Eugen, 76316 Malsch (DE)
(86) Internationale Anmeldenummer: PCT/DE2017/100586
(87) Internationale Veröffentlichungsnummer: WO 2018/024282

(56) Entgegenhaltungen:
- WO-A1-2009/112457
- DE-A1- 10 038 001
- DE-A1-102005 019 346
- DE-A1-102011 085 139
- US-A1- 2015 316 396

## Beschreibung

Die vorliegende Erfindung betrifft eine Betätigungseinrichtung, insbesondere zur Betätigung einer Kupplung in einem Antriebsstrang eines Kraftfahrzeugs, umfassend eine Antriebseinrichtung zur Realisierung einer translatorischen Bewegung zwecks Betätigung einer Kupplung sowie mindestens einen Sensor zur Erfassung zumindest eines physikalischen Parameters eines beweglichen Elements der Betätigungseinrichtung, Des Weiteren betrifft die Erfindung ein Verfahren zur Herstellung der erfindungsgemäßen Betätigungseinrichtung sowie eine Reibungskupplung, die eine erfindungsgemäße Betätigungseinrichtung aufweist.

Zur Betätigung von Kupplungen in Fahrzeugen werden zunehmend Betätigungseinrichtungen genutzt, die elektrisch angetrieben sind und zentral auf ein bewegliches Element der Kupplung wirken. Derartige Betätigungseinrichtungen werden auch als elektrische Zentralausrücker bezeichnet. Zur Ermittlung wenigstens eines sich beim Betätigungsvorgang ändernden physikalischen Parameters, wie zum Beispiel des Betätigungsweges oder einer Position, umfasst eine derartige Betätigungseinrichtung beziehungsweise ein solcher elektrischer Zentralausrücker wenigstens einen Sensor, oftmals mehrere Sensoren. Üblicherweise ist ein solcher Sensor dabei an einem tragenden Element der Betätigungseinrichtung angeordnet. Zur exakten Ermittlung der Werte des zu erfassenden physikalischen Parameters ist eine exakte Positionierung des Sensors unbedingt notwendig. Schon relativ geringe Abweichungen der Position des Sensors von einem Soll-Maß können zu unzulässigen Verfälschungen der vom Sensor ermittelten Messwerte beziehungsweise ermittelten Zustände führen.
Ein derartiger Sensor umfasst üblicherweise ein oder mehrere sensitive Elemente, die auf einer Platine und/oder einem sogenannten Hilfselement angeordnet sind, wobei die Platine beziehungsweise das Hilfselement samt der sensitiven Elemente in bevorzugten Ausgestaltungen durch Umspritzung von einem urgeformten Gehäusewerkstoff umgeben sein kann. Die Außenseite eines derart hergestellten Sensors dient zu Positionierung des Sensors durch Anlage an einer oder mehreren Flächen des tragenden Elements der Betätigungseinrichtung. Das bedeutet, dass nicht nur eine ungewünschte Lageabweichung der sensitiven Elemente innerhalb des Sensors zu einer unbestimmten Position und somit auch zu ungenauen Messergebnissen des Sensors führen kann, sondern auch eine ungenaue Positionierung des gesamten Sensors in Bezug zur restlichen Betätigungseinrichtung,

Eine Sensoranordnung mit einem Sensorhalter, welcher mittels Vorsprüngen in einer Nut eines Gehäuses einer Funktionseinheit fixiert ist, ist z.B. aus der DE 100 38 001 A1 bekannt.

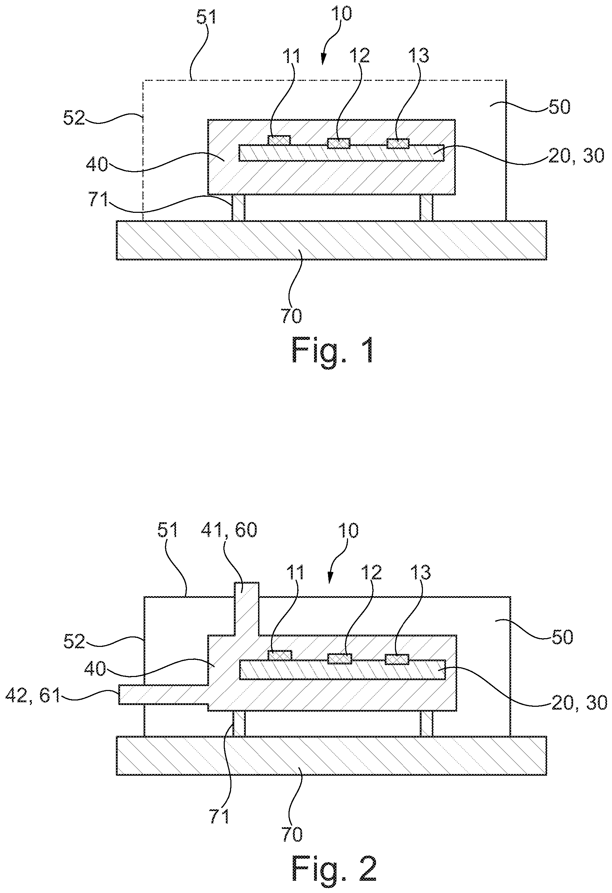

In Figur 1 ist ein herkömmlicher Sensor bei dessen Herstellung dargestellt. Dieser herkömmliche Sensor weist in der hier dargestellten Ausführungsform ein erstes sensitives Element 11, ein zweites sensitive Element 12 und ein drittes sensitives Element 13 auf, die auf einer gemeinsamen Platine 30 angeordnet sind, welche hier das Basiselement 20 ausbildet. Die sensitiven Elemente 11, 12, 13 sowie die Platine 30 sind dabei von einem Hilfselement 40 umschlossen oder auf diesem mittels Steckverbindung angeordnet, so dass das Hilfselement 40 die Platine 30 und die sensitiven Elemente 11, 12,13 trägt.
Dieses Hilfselement 40 wiederum ist von einem Gehäuse 50 umschlossen, welches dem Sensor 10 insgesamt eine quaderförmige Form verleiht. Das Gehäuse 50 bildet unter anderem eine erste Außenfläche 51 und eine zweite Außenfläche 52 aus.
Zur Herstellung des in Figur 1 dargestellten herkömmlichen Sensors 10 wird wie in Figur 1 angedeutet das Hilfselement 40 mit der daran angeordneten Platine und den sensitiven Elementen 11, 12, 13 von dem Material des Gehäuses 50 umspritzt, wobei zu diesem Zweck das Hilfselement 40 von Abstandshaltern 71 in einer Spritzgussform 70 positioniert und fixiert wird. Dabei ist in Figur 1 nur ein Ausschnitt der Spritzgussform 70 dargestellt, die an der der ersten Außenfläche 51 gegenüberliegenden Fläche anliegt. Der dadurch hergestellte Sensor 10 kann mit seinen beiden Außenflächen 51, 52 an entsprechenden Flächen angelegt und derart positioniert werden, wie zum Beispiel an Flächen an einer Betätigungseinrichtung wie z.B. eines Zentralausrückers, und dort wenigstens einen Wert eines physikalischen Parameters, der von der Betätigungseinrichtung realisiert wird, ermitteln.

Der Erfindung liegt daher die Aufgabe zu Grunde, eine mit einem Sensor ausgestattete Betätigungseinrichtung ein Verfahren zur Herstellung der Betätigungseinrichtung und eine die Betätigungseinrichtung aufweisende Reibungskupplung zur Verfügung zu stellen, mit denen eine Reibungskupplung derart ausgestaltbar ist, dass wenigstens ein physikalischer Parameter bei Betätigung der Reibungskupplung in exakter und zuverlässiger Weise über eine lange Lebensdauer der Reibungskupplung bestimmbar ist.

Diese Aufgabe wird durch die erfindungsgemäße Betätigungseinrichtung nach Anspruch 1, , das Verfahren zur Herstellung der Betätigungseinrichtung nach Anspruch 8 sowie die Reibungskupplung nach Anspruch 9 gelöst.

Vorteilhafte Ausgestaltungen der erfindungsgemäßen Betätigungseinrichtung sind in den Unteransprüchen 2 bis 7 angegeben.

Der Sensor der erfindungsgemäßen Betätigungseinrichtung dient zur Erfassung zumindest eines physikalischen Parameters eines beweglichen Elements einer Betätigungseinrichtung, insbesondere eines Zentralausrückers zur Betätigung einer Kupplung, oder eines physikalischen Parameters eines beweglichen Elements der Kupplung selbst. In einer Ausgestaltung der Erfindung misst der Sensor die Winkelposition eines Rotors einer elektromotorischen Antriebseinrichtung, um daraus Rückschlüsse über eine Weg-Position eines Betätigungselementes ziehen zu können, Der Sensor umfasst wenigstens ein sensitives Element zur Erfassung des physikalischen Wertes oder Zustandes des physikalischen Parameters sowie wenigstens ein das sensitive Element tragendes Basiselement, wobei der Sensor an wenigstens einer Außenfläche zumindest zwei Formelemente zur definierten Positionierung des Sensors an einem Träger aufweist. Mit dem Sensor ist gemäß der vorliegenden Erfindung somit die gesamte Einrichtung gemeint, die ein oder mehrere sensitive Elemente sowie entsprechende Schnittstellen zum Auslesen der erfassten Größe oder des erfassten Zustandes aufweist.
Der Sensor bzw. seine sensitiven Elemente können als Hall-Sensoren ausgestaltet sein.

Je nach Ausgestaltung kann der Sensor des Weiteren eine Platine, ein Hilfselement und/oder ein Gehäuse aufweisen. Die erfindungsgemäß an wenigstens einer Außenfläche angeordneten zwei Formelemente müssen dabei nicht zwingend gemeinsam an einer Außenfläche angeordnet sein, sondern sie können auch derart an zwei Außenflächen angeordnet sein, dass ein erstes Formelement an einer ersten Außenfläche angeordnet ist und zweites Formelement an einer zweiten Außenfläche angeordnet ist.

In einer vorteilhaften Ausgestaltungsform des Sensors ist vorgesehen, dass dieser zwei winklig zueinander verlaufende Außenflächen aufweist und jeweils wenigstens ein Formelement an einer dieser Außenflächen angeordnet ist. Demzufolge erstrecken sich auch die Formelemente winklig zueinander, wenn sie von den Außenflächen abstehen.
Ein jeweiliges Formelement kann dabei ein von der Ebene der jeweiligen Außenfläche vorstehender Vorsprung sein. Insbesondere kann ein solcher Vorsprung die Form eines zylindrischen Stiftes aufweisen. Dabei soll allerdings nicht ausgeschlossen sein, dass ein Formelement in Form eines Lochs bzw. einer Bohrung oder einer Aussparung ausgeführt ist.
Zwecks Verhinderung der Montage des Sensors in einer falschen Winkelposition ist vorteilhafterweise der Sensor mit mindestens zwei als zylindrischen Stiften ausgeführten Vorsprüngen als Formelemente ausgebildet, wobei die zylindrischen Stifte unterschiedliche Durchmesser aufweisen.
Wie bereits erwähnt, kann der Sensor des Weiteren eine Platine, ein Hilfselement und/oder ein Gehäuse aufweisen. Das das sensitive Element tragende Basiselement kann in dem Fall die Platine sein, wobei die Platine in oder auf dem Hilfselement und/oder in dem Gehäuse gelagert ist und das Hilfselement beziehungsweise das Gehäuse die Außenfläche des Sensors ausbildet. In einer zweiten Alternative ist das das sensitive Element tragende Basiselement das Hilfselement, welches die Außenfläche des Sensors ausbildet. In einer dritten Alternative ist das das sensitive Element tragende Basisteil das Hilfselement, welches in einem Gehäuse gelagert ist, welches die Außenfläche des Sensors bildet. Als vierte Ausführungsalternative ist das Gehäuse das das sensitive Element tragende Basiselement, wobei das Gehäuse die Außenfläche des Sensors ausbildet. Das jeweilige, vorzugsweise als Vorsprung ausgebildete Formelement ist somit am Gehäuse oder am Hilfselement ausgebildet, je nachdem, ob das Gehäuse beziehungsweise das Hilfselement die Außenfläche des Sensors ausbildet.

Demzufolge können folgende Kombinationen von Elementen des Sensors vorliegen:
- sensitives Element, Platine, Hilfselement und/oder Gehäuse
- sensitives Element, Hilfselement, Gehäuse
- sensitives Element, Hilfselement,
- sensitives Element, Gehäuse.

Das Hilfselement ist dabei vorzugsweise ein sogenannter Vorspritzling bzw. ein Einlegeelement, der der Anordnung der Platine bzw. der sensitiven Elemente in einer Gießform dient und die Umspritzung der Platine bzw. der sensitiven Elemente mit einem Gehäusewerkstoff erleichtert.

Das als Vorsprung ausgebildete Formelement ist vorzugsweise durch das Material des Bauteils realisiert, welches die Außenfläche ausbildet. Dabei ist jedoch auch nicht die Variante ausgeschlossen, dass das vorsprungartige Formelement durch einen herausragenden Abschnitt eines Insertelements ausgebildet ist, welches mit der Platine verbunden ist. Ein solches Insertelement ist ein stangenartiges Element, welches mechanisch an die Platine anschließt und aus der jeweiligen Außenfläche des Sensors herausragt.

Des Weiteren können die vorsprungartigen Formelemente auch durch Kombinationen von wenigstens zwei der genannten Elemente wie zum Beispiel Gehäuse und Hilfselement ausgeführt sein.

Ein weiterer nicht beanspruchter Aspekt der vorliegenden Erfindung ist ein Verfahren zur Herstellung des erfindungsgemäßen Sensors, bei dem ein oder mehrere sensitive Elemente sowie das Basiselement zur Verfügung gestellt werden, das sensitive Element an, auf oder in dem Basiselement fixiert wird und an wenigstens einer Außenfläche des Sensors zumindest zwei Formelemente zur definierten Positionierung des Sensors an einem Träger ausgebildet werden.

In einer Ausführung des Herstellungsverfahrens ist vorgesehen, dass die Außenfläche durch einen Urformprozess, insbesondere durch einen Gießprozess, ausgebildet wird. Dabei kann, je nach Ausgestaltung des erfindungsgemäßen Sensors, in unterschiedlicher Weise vorgegangen werden.

Es kann das sensitive Element von einem urgeformten Gehäusewerkstoff im Wesentlichen eingebettet werden. In einer zweiten Verfahrensalternative wird das sensitive Element von einem urgeformten Hilfselement-Werkstoff im Wesentlichen eingebettet. In einer dritten Verfahrensalternative wird das sensitive Element auf bzw. an einem Hilfselement angeordnet, wie z.B. aufgesteckt, und das Hilfselement selbst wird von einem urgeformten Gehäusewerkstoff im Wesentlichen eingebettet. Dabei kann das sensitive Element an oder auf einer Platine angeordnet sein, Wenn das sensitive Element an oder auf einer Platine angeordnet ist, ergeben sich die weiteren Verfahrensalternativen, dass das auf der Platine angeordnete sensitive Element von einem urgeformten Gehäusewerkstoff im Wesentlichen eingebettet wird oder das auf der Platine angeordnete sensitive Element von einem urgeformten Hilfselement-Werkstoff im Wesentlichen eingebettet wird oder das auf der Platine angeordnete sensitive Element auf bzw. an einem Hilfselement angeordnet ist und das Hilfselement von einem urgeformten Gehäusewerkstoff im Wesentlichen eingebettet wird. Dadurch ergeben sich die genannten unterschiedlichen Ausführungsformen des Sensors. Selbstverständlich ist eine Nachbearbeitung der durch Urformen erzeugten Außenflächen nicht ausgeschlossen, um die finale Form und Maßgebung des Sensors zu erzeugen.

Die erfindungsgemäße Betätigungseinrichtung kann mechanisch, hydraulisch oder elektrisch angetrieben sein. Insbesondere kann eine solche Betätigungseinrichtung ein elektrischer Zentralausrücker sein, der zu Betätigung einer Kupplung, insbesondere einer Reibungskupplung in einem Antriebsstrang eines Kraftfahrzeuges, ausgestaltet ist. Die Betätigungseinrichtung umfasst eine Antriebseinrichtung zur Realisierung einer translatorischen Bewegung zwecks Betätigung einer Kupplung sowie mindestens einen Sensor, der an der Antriebseinrichtung angeordnet ist Die Antriebseinrichtung weist dabei zwei komplementäre Formelemente auf, mit denen die Formelemente des Sensors mechanisch verbunden sind.
Vorzugsweise sind die Formelemente des Sensors als Vorsprünge ausgestaltet und die komplementären Formelemente der Antriebseinrichtung entsprechend als Bohrungen bzw. Löcher oder Aussparungen, in die die Vorsprünge eingeführt werden können.
Allerdings soll auch eine umgekehrte Anordnung von Vorsprüngen und Aussparungen am Sensor sowie der Antriebseinrichtung nicht ausgeschlossen sein.

Eine Betätigungseinrichtung bzw. ein Zentralausrücker dient der direkten Betätigung einer Kupplung zwecks Ausrücken der Anpressplatte der Kupplung.
Der elektrische Zentralausrücker hat den Vorteil eines geringen Bauraums, einer zuverlässigen und schnellen Betätigung und eines geringen benötigten Volumens für Leitungselemente. Gegebenenfalls kann der Zentralausrücker auch zur Realisierung einer Einrück-Bewegung der Anpressplatte der Kupplung ausgestaltet sein.

Üblicherweise umfasst ein derartiger Zentralausrücker eine motorische Antriebseinrichtung, die über ein geeignetes Getriebe eine Rotationsbewegung der Antriebseinrichtung in eine translatorische Bewegung umsetzt, um derart die Kupplung betätigen zu können.

Wie erwähnt können die Formelemente des Sensors insbesondere als Vorsprünge beziehungsweise zylinderförmige Stifte ausgebildet sein, sodass die komplementären Formelemente an der Betätigungseinrichtung entsprechend geformte und dimensionierte Aussparungen beziehungsweise Löcher sind, in denen die Formelemente des Sensors stecken, wobei eine Presspassung zwischen den Formelementen des Sensors und den komplementären Formelementen der Antriebseinrichtung nicht ausgeschlossen sein soll. Durch die Verbindung der Formelemente des Sensors mit den komplementären Formelementen der Antriebseinrichtung werden dem Sensor insgesamt zwei translatorische Freiheitsgrade und drei rotatorische Freiheitsgrade genommen. Insofern zusätzlich noch eine Anlage des Sensors an einer Anlagefläche der Antriebseinrichtung erfolgt, ist somit auch der dritte translatorische Freiheitsgrad des Sensors in zumindest einer Richtung blockiert, sodass die Formelemente nicht nur für eine exakte Positionierung des Sensors, sondern zumindest teilweise auch für eine Fixierung des Sensors sorgen.

Ein weiterer Aspekt der vorliegenden Erfindung ist ein Verfahren zur Herstellung der erfindungsgemäßen Betätigungseinrichtung, bei dem die Antriebseinrichtung sowie der Sensor zur Verfügung gestellt werden und die Formelemente des Sensors mit den komplementären Formelementen der Antriebseinrichtung verbunden werden, sodass der Sensor bezüglich der Antriebseinrichtung positioniert ist.

Außerdem bezieht sich die vorliegende Erfindung auf eine Reibungskupplung zum lösbaren Verbinden einer Abtriebswelle mit einem Antriebsstrang, wobei die Reibungskupplung zumindest ein Reibpaket mit einer Anpressplatte und eine korrespondierende Reibscheibe, über die im angepressten Zustand im Drehmoment übertragbar ist, aufweist, sowie zumindest ein Abtriebselement, das mit dem Reibpaket in Verbindung steht. Des Weiteren umfasst die erfindungsgemäße Reibungskupplung eine erfindungsgemäße Betätigungseinrichtung, mit dem die Anpressplatte axial verlagerbar ist.

Die Reibkupplung ist dazu eingerichtet, ein Drehmoment von einer Abtriebswelle auf einen Verbraucher und umgekehrt zu übertragen. Dies wird in der Regel über das Reibpaket erreicht, welches eine axial verschiebbare, in der Regel mit der Abtriebswelle rotationsfest verbundene, Anpressplatte aufweist, welche gegen zumindest eine korrespondierende Reibscheibe pressbar ist. Aus der Anpresskraft resultiert eine Reibkraft über die Reibfläche, welche multipliziert mit dem mittleren Radius der Reibfläche ein übertragbares Drehmoment ergibt.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die in den Zeichnungen gezeigten Ausführungsbeispiele nicht auf die dargestellten Maß eingeschränkt sind. Es ist dargestellt in
- Figur 1:: ein herkömmlicher Sensor bei dessen Herstellung,
- Figur 2:: ein Sensor einer erfindungsgemäßen Betätigungseinrichtung einer ersten Ausführungsalternative bei dessen Herstellung,
- Figur 3:: der Sensor einer erfindungsgemäßen Betätigungseinrichtung der ersten Ausführungsalternative,
- Figur 4:: ein Sensor einer erfindungsgemäßen Betätigungseinrichtung einer zweiten Ausführungsalternative bei dessen Herstellung,
- Figur 5:: ein Sensor einer erfindungsgemäßen Betätigungseinrichtung einer dritten Ausführungsalternative bei dessen Herstellung.

Auf den in Figur 1 dargestellten herkömmlichen Sensor ist bereits in der Beschreibungseinleitung eingegangen worden.

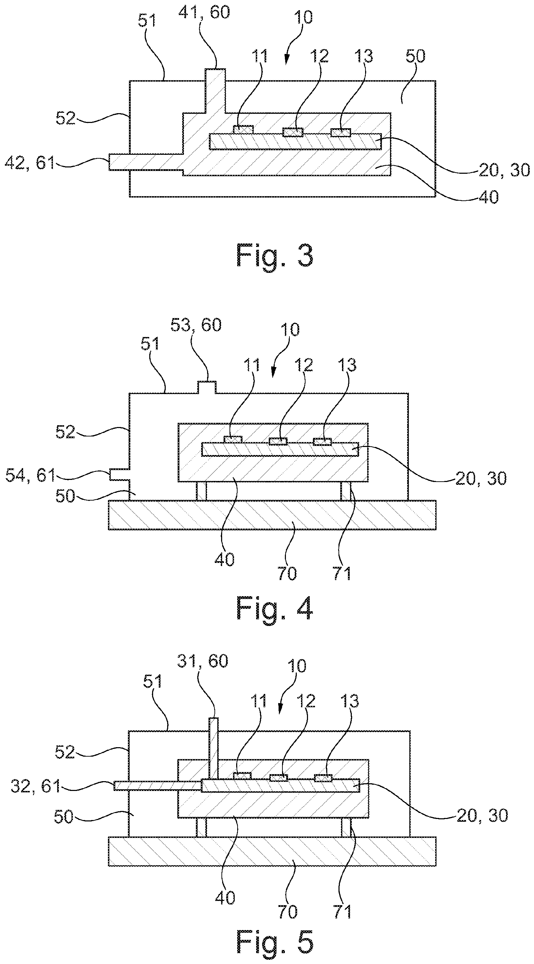

Ein Sensor einer erfindungsgemäßen Betätigungseinrichtung ist in Ausführungsalternativen in den Figuren 2 bis 5 dargestellt, wobei in den Figuren 2, 4 und 5 der Sensor im Zuge seines Herstellungsprozesses dargestellt ist, und in Figur 3 ohne ein zur Herstellung notwendiges Werkzeug.
In der in Figur 2 dargestellten Ausführungsform ist der Sensor ebenfalls mit drei sensitiven Elementen 11, 12, 13 ausgestaltet, die auf einer Platine 30 ruhen, die hier das Basiselement 20 ausbildet. In dieser Ausgestaltung ist die Platine 30 samt den sensitiven Elementen 11, 12, 13 auf einem Hilfselement 40 angeordnet bzw. von einem Hilfselement 40 umschlossen, das wiederum vom Material eines gegossenen Gehäuses 50 umschlossen beziehungsweise eingebettet ist. Ersichtlich sind hier ein erstes Formelement 60 als ein erster Hilfselement-Vorsprung 41, der aus der ersten Außenfläche 51 herausragt, sowie als ein zweites Formelement 61 ein zweiter Hilfselement-Vorsprung 42, der aus der zweiten Außenfläche 52 herausragt. Diese Vorsprünge 41, 42 sind vorzugsweise stiftförmig ausgeführt. Das bedeutet, dass in der hier dargestellten Ausführungsalternative das Hilfselement 40 durch das Material des Gehäuses 50 bis auf die Außenflächen 51, 52 heraus geführt ist und aus diesen Außenflächen 51, 52 herausragt.
Dabei ist zwecks Herstellung des in Figur 2 dargestellten Sensors 10 vorgesehen, dass das Gehäuse 50 in einem Spritzgussprozess ausgebildet wird, wobei das Material des Gehäuses 50 das Hilfselement 40 und demzufolge auch die Platine 30 mit den sensitiven Elementen 11, 12, 13 umschließt. Zu diesem Zweck ist das Hilfselement 40 mit den Abstandshaltern 71 in Bezug zu der hier nur teilweise dargestellten Spritzgussform 70 positioniert und fixiert.

In Figur 3 ist der Bezug zu Figur 2 beschriebene Sensor 10 ohne das Spritzgusswerkzeug dargestellt. Es ist ersichtlich, dass das Gehäuse 50 im Wesentlichen eine Quaderform ausbildet.

Figur 4 zeigt eine weitere Ausführungsalternative des Sensors 10, der auch hier die drei sensitiven Elemente 11, 12, 13 auf einer Platine 30 aufweist, die vom Hilfselement 40 aufgenommen ist. Das Hilfselement 40 ist vom Gehäuse 50 eingeschlossen, wobei hier das Gehäuse 50 selbst als erstes Formelement 60 einen ersten Gehäuse-Vorsprung 53 sowie als zweites Formelement 61 einen zweiten Gehäuse-Vorsprung 54 ausbildet, wobei der erste Gehäuse-Vorsprung 53 an der ersten Außenfläche 51 angeordnet ist und der zweite Gehäuse-Vorsprung 54 an der zweiten Außenfläche 52 angeordnet ist. Vorzugsweise ist auch eine Spritzgussform 70 zur Herstellung des Gehäuses 50 derart ausgestaltet, um die Gehäuse-Vorsprünge 53, 54 erzeugen zu können, wobei allerdings auch eine nachträgliche, insbesondere spanende Bearbeitung des Gehäuses 50 zur Herstellung der Gehäuse-Vorsprünge 53, 54 nicht ausgeschlossen werden soll.

Eine dritte Ausführungsalternative zeigt Figur 5, wobei auch hier die sensitiven Elemente 11, 12, 13 auf der Platine 30 angeordnet sind, die vom Hilfselement 40 aufgenommen ist. Das Hilfselement 40 ist ebenfalls wie bereits beschrieben vom Gehäuse 50, welches in einem Urformverfahren hergestellt wird, umschlossen. Im Gegensatz zu den bisher vorgestellten Ausführungsalternativen sind hier das erste Formelement 60 und das zweite Formelement 61 nicht durch Abschnitte des Hilfselements 40 beziehungsweise des Gehäuses 50 ausgebildet, sondern sind durch extra angeordnete Insertelemente 31, 32 realisiert. Ein erstes Insertelement 31 ist dabei mit der Platine 30 mechanisch verbunden und ragt aus der ersten Außenfläche 51 heraus. Ein zweites Insertelement 32 ist ebenfalls mit der Platine 30 mechanisch verbunden und ragt aus der zweiten Außenfläche 52 heraus.

Allen vorgestellten Ausführungsvarianten des Sensors ist gemeinsam, dass sie an zwei Außenflächen 51, 52 Formelemente 60, 61 aufweisen, die bei Anordnung in entsprechend komplementären Formelementen zum Beispiel an einer Antriebseinrichtung einer Betätigungseinrichtung wie z.B. eines Zentralausrückers die exakte Position des Sensors 10 in Bezug zu Elementen der Antriebseinrichtung beziehungsweise der Betätigungseinrichtung gewährleisten, deren physikalische Parameter zu messen beziehungsweise zu ermitteln sind. Dadurch ist gewährleistet, dass Messungenauigkeiten aufgrund von ungewollten Positionsabweichungen des Sensors verhindert werden.

Durch die erfindungsgemäße Ausgestaltung des Sensors mit den Formelementen lässt sich somit sicherstellen, dass der Sensor im Bezug zu Elementen der Betätigungseinrichtung exakt positioniert ist und demzufolge exakte Messergebnisse liefern kann. Etwaige Fertigungstoleranzen insbesondere von Außenflächen beziehungsweise Außen-Abmaßen sind daher unerheblich. Dies gilt insbesondere für die Ausführungsformen der Erfindung, bei denen die Formelemente durch Bauteile im Inneren des Gehäuses realisiert sind, die sich aus dem Gehäuse heraus erstrecken, da in diesen Ausgestaltungen die Toleranzketten von den sensitiven Elementen zu den Formelementen relativ kurz sind.
Des Weiteren ist die Montage des Sensors durch die selbsterklärende Einpassung der Formelemente des Sensors an der Betätigungseinrichtung erleichtert. Statt in herkömmlicher Weise den Sensor mit exakten Außenflächen zu fertigen, müssen nunmehr nur noch die Formelemente in exakter Weise in Bezug zu den sensitiven Elementen positioniert werden.

### Bezugszeichenliste

- 10: Sensor
- 11: Erstes sensitives Element
- 12: Zweites sensitives Element
- 13: Drittes sensitives Element
- 20: Basiselement
- 30: Platine
- 31: Erstes Insertelement
- 32: Zweites Insertelement
- 40: Hilfselement
- 41: Erster Hilfselement-Vorsprung
- 42: Zweiter Hilfselement-Vorsprung
- 50: Gehäuse
- 51: Erste Außenfläche
- 52: Zweite Außenfläche
- 53: Erster Gehäuse-Vorsprung
- 54: Zweiter Gehäuse-Vorsprung
- 60: Erstes Formelement
- 61: Zweites Formelement
- 70: Spritzgussform
- 71: Abstandshalter

## Patentansprüche

1. Betätigungseinrichtung, insbesondere mechanisch, hydraulisch oder elektrisch angetriebene Betätigungseinrichtung wie z.B. elektrischer Zentralausrücker, zur Betätigung einer Kupplung, insbesondere einer Reibungskupplung in einem Antriebsstrang eines Kraftfahrzeugs, umfassend eine Antriebseinrichtung zur Realisierung einer translatorischen Bewegung zwecks Betätigung einer Kupplung sowie mindestens einen Sensor (10), der an der Antriebseinrichtung angeordnet ist, wobei der Sensor (10) zur Erfassung zumindest eines physikalischen Parameters eines beweglichen Elements der Betätigungseinrichtung, oder eines physikalischen Parameters eines beweglichen Elements einer Kupplung,
wenigstens ein sensitives Element (11,12,13) zur Erfassung eines physikalischen Wertes oder Zustandes sowie wenigstens ein das sensitive Element (11,12,13) tragendes Basiselement (20) umfasst, der Sensor (10) an wenigstens einer Außenfläche (51,52) zumindest zwei Formelemente (60,61) zur definierten Positionierung des Sensors (10) an einem Träger aufweist, wobei die Antriebseinrichtung zwei komplementäre Formelemente aufweist, mit denen die Formelemente (60,61) des Sensors mechanisch verbunden sind, **dadurch gekennzeichnet, dass** der Sensor (10) ein gegossenes Gehäuse (50) umfasst und die Formelemente (60,61) aus dem Gehäuse (50) herausgeführt oder von diesem gebildet sind.

2. Betätigungseinrichtung nach Anspruch 1, wobei der Sensor (10) zwei winklig zueinander verlaufende Außenflächen (51,52) aufweist und jeweils wenigstens ein Formelement (60,61) an einer Außenfläche (51,52) angeordnet ist.

3. Betätigungseinrichtung nach einem der vorhergehenden Ansprüche, wobei das Formelement (60,61) ein von der Ebene der Außenfläche (51,52) vorstehender Vorsprung ist.

4. Betätigungseinrichtung nach einem der vorhergehenden Ansprüche, wobei der Sensor (10) als Formelemente (60,61) mindestens zwei als zylindrische Stifte ausgeführte Vorsprünge (41,42,53,54) aufweist, die unterschiedliche Durchmesser aufweisen.

5. Betätigungseinrichtung nach einem der vorhergehenden Ansprüche, wobei der Sensor (10) des Weiteren eine Platine (30), ein Hilfselement (40) und/ oder ein Gehäuse 50 aufweist, und wobei das das sensitive Element (11,12,13) tragende Basisteil (20) ist:
i) die Platine (30), wobei die Platine (30) in oder auf dem Hilfselement (40) und/ oder in dem Gehäuse (50) gelagert ist und das Hilfselement (40) bzw. das Gehäuse (50) die Außenfläche (51,52) des Sensors (10) ausbildet,
ii) das Hilfselement (40), welches die Außenfläche des Sensors (10) ausbildet,
iii) das Hilfselement (40), welches in einem Gehäuse (50) gelagert ist, welches die Außenfläche (51,52) des Sensors (10) ausbildet,
v) das Gehäuse (50), welches die Außenfläche (51,52) des Sensors ausbildet.

6. Betätigungseinrichtung nach Anspruch 1, wobei die Formelemente (60,61) durch das Material des Gehäuses (50) bis auf die Außenflächen (51,52) herausgeführt sind und aus diesen Außenflächen (51,52) herausragt.

7. Betätigungseinrichtung nach Anspruch 6, wobei die Formelemente (60,61) als Hilfselement-Vorsprünge (41,42) des Hilfselementes (40) oder als Insertelemente (31,32) ausgebildet sind

8. Verfahren zur Herstellung der Betätigungseinrichtung gemäß einem der Ansprüche 1 bis 7, bei dem die Antriebseinrichtung sowie der Sensor (10) zur Verfügung gestellt werden und die Formelemente (60,61) des Sensors (10) mit den komplementären Formelementen der Antriebseinrichtung verbunden werden, so dass der Sensor (10) bezüglich der Antriebseinrichtung positioniert ist.

9. Reibungskupplung, zum lösbaren Verbinden einer Abtriebswelle mit einem Antriebsstrang, aufweisend zumindest die folgenden Komponenten:
- ein Reibpaket mit einer Anpressplatte und einer korrespondierenden Reibscheibe, über die im angepressten Zustand ein Drehmoment übertragbar ist;
- zumindest ein Abtriebselement, das mit dem Reibpaket in Verbindung steht; und eine Betätigungseinrichtung gemäß einem der Ansprüche 1 bis 7, mit der die Anpressplatte axial verlagerbar ist.

## Claims

1. An actuator, in particular a mechanically, hydraulically or electrically driven actuator such as, for example, an electrical central release means, for actuating a clutch, in particular a friction clutch in a drive train of a motor vehicle, comprising a drive device for producing a translatory movement for actuating a clutch, and at least one sensor (10) which is arranged on the drive device, wherein the sensor (10) for detecting at least one physical parameter of a movable element of the actuator or a physical parameter of a movable element of a clutch comprises
at least one sensitive element (11, 12, 13) for detecting a physical value or state and at least one base element (20) carrying the sensitive element (11, 12, 13), the sensor (10) has at least two shaped elements (60, 61) on at least one outer surface (51, 52) for the defined positioning of the sensor (10) on a carrier, wherein the drive device has two complementary shaped elements with which the shaped elements (60, 61) of the sensor are mechanically connected, **characterised in that** the sensor (10) comprises a cast housing (50) and the shaped elements (60, 61) are led through the housing (50) or are formed by the same.

2. The actuator according to claim 1, wherein the sensor (10) has two outer surfaces (51, 52) extending at an angle to one another and at least one shaped element (60, 61) is arranged on an outer surface (51, 52).

3. The actuator according to any one of the preceding claims, wherein the shaped element (60, 61) is a projection projecting from the plane of the outer surface (51, 52).

4. The actuator according to any one of the preceding claims, wherein, as shaped elements (60, 61), the sensor (10) has at least two projections (41, 42, 53, 54) designed as cylindrical pins having different diameters.

5. The actuator according to any one of the preceding claims, wherein the sensor (10) further comprises a circuit board (30), an auxiliary element (40) and/or a housing 50, and wherein the base part (20) carrying the sensitive element (11, 12, 13) is:
i) the circuit board (30), wherein the circuit board (30) is mounted in or on the auxiliary element (40) and/or in the housing (50) and the auxiliary element (40) or the housing (50) forms the outer surface (51, 52) of the sensor (10),
ii) the auxiliary element (40), which forms the outer surface of the sensor (10),
iii) the auxiliary element (40), which is mounted in a housing (50), which forms the outer surface (51, 52) of the sensor (10),
iv) the housing (50), which forms the outer surface (51, 52) of the sensor.

6. The actuator according to claim 1, wherein the shaped elements (60, 61) are led through the material of the housing (50) to the outer surfaces (51, 52) and protrude from these outer surfaces (51, 52).

7. The actuator according to claim 6, wherein the shaped elements (60, 61) are designed as auxiliary element projections (41, 42) of the auxiliary element (40) or as insert elements (31, 32).

8. A method for producing the actuator according to any one of claims 1 to 7, in which the drive device and the sensor (10) are made available and the shaped elements (60, 61) of the sensor (10) are connected to the complementary shaped elements of the drive device, so that the sensor (10) is positioned with respect to the drive device.

9. A friction clutch for releasably connecting an output shaft to a drive train, comprising at least the following components:
- a friction pack with a pressure plate and a corresponding friction disc, via which a torque can be transmitted in the pressed on state;
- at least one output element which is connected to the friction pack; and an actuator according to any one of claims 1 to 7, by means of which the pressure plate can be axially displaced.

## Revendications

1. Dispositif d'actionnement, en particulier dispositif d'actionnement à entraînement mécanique, hydraulique ou électrique, tel que, par exemple, un dispositif de débrayage central électrique, pour actionner un embrayage, en particulier un embrayage à friction dans une chaîne cinématique d'un véhicule à moteur, comprenant un dispositif d'entraînement pour réaliser un mouvement de translation pour actionner un embrayage, ainsi qu'au moins un capteur (10), lequel est disposé sur le dispositif d'entraînement, dans lequel le capteur (10), pour détecter au moins un paramètre physique d'un élément mobile du dispositif d'actionnement ou un paramètre physique d'un élément mobile d'un embrayage,
comporte au moins un élément (11, 12, 13) sensible pour détecter une valeur physique ou un état, ainsi qu'au moins un élément de base (20) portant l'élément (11, 12, 13) sensible, le capteur (10), sur au moins une surface extérieure (51, 52), comporte au moins deux éléments moulés (60, 61) pour le positionnement défini du capteur (10) sur un support, dans lequel le dispositif d'entraînement comporte deux éléments moulés complémentaires auxquels les éléments moulés (60, 61) du capteur sont raccordés mécaniquement, **caractérisé en ce que** le capteur (10) comprend un boîtier coulé (50) et les éléments moulés (60, 61) sont guidés hors du boîtier (50) ou sont formés par celui-ci.

2. Dispositif d'actionnement selon la revendication 1, dans lequel le capteur (10) comporte deux surfaces externes (51, 52) s'étendant à un angle l'une par rapport à l'autre et respectivement au moins un élément moulé (60, 61) est disposé sur une surface externe (51, 52).

3. Dispositif d'actionnement selon l'une quelconque des revendications précédentes, dans lequel l'élément moulé (60, 61) est une saillie s'étendant depuis le plan de la surface externe (51, 52).

4. Dispositif d'actionnement selon l'une quelconque des revendications précédentes, dans lequel le capteur (10) comporte au moins deux saillies (41, 42, 53, 54) conçues sous la forme de broches cylindriques (60, 61), lesquelles présentent des diamètres différents.

5. Dispositif d'actionnement selon l'une quelconque des revendications précédentes, dans lequel le capteur (10) comporte en outre une carte de circuit imprimé (30), un élément auxiliaire (40) et/ou un boîtier (50), et dans lequel la partie de base (11, 12, 13) portant l'élément (20) sensible est :
i) la carte de circuit imprimé (30), dans lequel la carte de circuit imprimé (30) est montée dans ou sur l'élément auxiliaire (40) et/ou dans le boîtier (50) et l'élément auxiliaire (40) ou le boîtier (50) forme la surface extérieure (51, 52) du capteur (10),
ii) l'élément auxiliaire (40), lequel forme la surface extérieure du capteur (10),
iii) l'élément auxiliaire (40), lequel est monté dans un boîtier (50), lequel forme la surface extérieure (51, 52) du capteur (10),
iv) le boîtier (50), lequel forme la surface extérieure (51, 52) du capteur.

6. Dispositif d'actionnement selon la revendication 1, dans lequel les éléments moulés (60, 61) sont guidés à travers la matière du boîtier (50) vers les surfaces extérieures (51, 52) et font saillie depuis ces surfaces extérieures (51, 52).

7. Dispositif d'actionnement selon la revendication 6, dans lequel les éléments moulés (60, 61) sont conçus sous la forme de saillies d'élément auxiliaire (41, 42) de l'élément auxiliaire (40) ou sous la forme d'éléments d'insertion (31, 32).

8. Procédé de fabrication du dispositif d'actionnement selon l'une quelconque des revendications 1 à 7, selon lequel le dispositif d'actionnement ainsi que le capteur (10) sont mis à disposition et les éléments moulés (60, 61) du capteur (10) sont raccordés aux éléments moulés complémentaires du dispositif d'entraînement de telle sorte que le capteur (10) est positionné par rapport au dispositif d'entraînement.

9. Embrayage à friction, pour raccorder de manière amovible un arbre de sortie à une chaîne cinématique, comprenant au moins les composants suivants :
- un ensemble de friction comportant une plaque de pression et un disque de friction correspondant, au moyen duquel, dans un état pressé, un couple peut être transmis ;
- au moins un élément de sortie, lequel est en liaison avec l'ensemble de friction ; et un dispositif d'actionnement selon l'une quelconque des revendications 1 à 7, au moyen duquel la plaque de pression peut être déplacée axialement.
